# EUROPEAN PATENT SPECIFICATION

(11) **EP 3 255 977 B1**
(45) Date of publication and mention of the grant of the patent: **11.12.2019**
(21) Application number: 16749868.2
(22) Date of filing: 11.02.2016
(51) Int. Cl.: A01K 1/035, A23K 40/20, B28B 1/24, B29C 39/12, B29C 45/13, B29C 45/16, B29L 31/52

(54) **INJECTION MOLDED PET CHEW ARTICLE**
SPRITZGEGOSSENER KAUARTIKEL FÜR HAUSTIERE
ARTICLE À MÂCHER POUR ANIMAL DE COMPAGNIE MOULÉ PAR INJECTION

(30) Priority: 12.02.2015 US 201514620849
(43) Date of publication of application: 20.12.2017
(73) Proprietor: T.F.H. Publications, Inc., Neptune City, NJ 07753 (US)
(72) Inventor: AXELROD, Glen S., Colts Neck, New Jersey 07722 (US); WILLIAMS, Terry, Brick, New Jersey 08723 (US)
(74) Representative: Richly & Ritschel Patentanwälte PartG mbB
(86) International application number: PCT/US2016/017517
(87) International publication number: WO 2016/130782

(56) References cited:
- US-A1- 2007 098 841
- US-A1- 2007 212 456
- US-A1- 2007 264 415
- US-A1- 2007 264 415
- US-A1- 2007 289 551
- US-A1- 2008 003 270
- US-A1- 2011 076 366
- US-A1- 2013 221 572

## Description

### FIELD

The present disclosure relates to an injection molded pet chew article, and more particularly a co-injection molded pet chew article.

### BACKGROUND

U.S. Patent No. 2,279,344 to Reid discloses injection molded articles having patches and striations of contrasting color by introducing different colored, thermoplastic materials from separate feed locations into an injection cylinder of a plunger-type injection molding machine such that the compositions are not exposed to mixing with one another. After the compositions are suitably heated, the charge of unmixed compositions is injected from the injection cylinder into a molding cavity to produce a molded article having striations of different colors.

U.S. Patent No. 3,945,786 to Bishop discloses injection molded articles having a mottled appearance through use of a reciprocating screw injection molding machine having a conventional length barrel with a short feed screw located at the rear of the barrel and a spreader device positioned within a heated portion of the barrel ahead of the feed screw. As the feed screw is rotated to feed and soften molding materials of diverse coloration and is subsequently translated forwardly, the softened and partially blended materials are pushed through the spreader device such that final plasticization occurs. Since the length of the flighted, rotating screw is relatively short, the materials of diverse coloration are discharged from the screw in a softened condition, but not blended to the point that the distinct color patterns are lost.

U.S. Patent No. 4,299,792 to Nunn discloses that, as an alternative to use of a conventional barrel length with a short feed screw and a spreader, injection molded articles having a mottled appearance may be produced by use of a short barrel with a short reciprocating screw, however use of such a short barrel is not economical where a longer barrel is required for other applications.

U.S. Patent No. 4,299,792 to Nunn also discloses that as an alternative to use of a reciprocating screw injection molding machine having a conventional length barrel with a short screw located at the rear of the barrel and a spreader device positioned within a heated portion of the barrel ahead of the feed screw to produce injection molded articles having a mottled appearance, such may be achieved with a conventional length barrel and conventional length screw, provided the screw is a low shear screw.

U.S. Publication No. 2013/0069267 in the name of Liu discloses that plastic containers exhibiting a marbleized or swirl-type pattern may be produced from sequential co-injection, multi-material molding, particularly with an extruder having a single barrel and a single screw which injects two materials in a single shot with one material enclosing the other. An example of a commercially available device that may be used for co-injection multi-material molding is TWINSHOT®, available from Xaloy.

U.S. Publication No. 2013/0221572 in the name of Berg discloses that co-injection processes generally require a separate injection system for each material to pressurize the material prior to injecting the material into a molding cavity. The feed system is designed to fluidly transmit each material to a single gate where the materials are merged together. In some co-injection techniques, a second material can be introduced into the molding cavity at a position adjacent to a gate introducing the first material, wherein the second material is sequenced to begin to flow only after the first material has flowed past the second material gate position. This results in the second material penetrating the frozen skin layer of the first material and flowing up the liquid center portion of the material flow.

Berg also sets forth that co-injected materials may instead overlap or abut one another on an injection molded part, without encapsulation of one or more materials in another material. Thus, while co-injection may be used to embed one material within another so as to isolate a surface from contact with the embedded material, co-injection can also provide other means to increase the aesthetic options available to mold manufacturers. For instance, by varying the rate of introduction of one or more of a plurality of differently-colored co-injected materials, it is possible to achieve swirls or gradients of color within a single part, rather than being limited to abrupt, distinct transitions from one desired color to another within a given molded part.

### SUMMARY

According to at least one embodiment of the present disclosure, an injection molding method to form a pet chew article is according to claim 1.

### BRIEF DESCRIPTION OF THE DRAWINGS

The above-mentioned and other features of this disclosure, and the manner of attaining them, will become more apparent and better understood by reference to the following description of embodiments described herein taken in conjunction with the accompanying drawings, wherein:
FIG. 1 is a front view of a pet chew article, particularly a bone, according to the present disclosure; and
FIG. 2 is a rear view of a pet chew article of FIG. 1;
FIG. 3 is a table of physical properties of a polyamide terpolymer which may be used to form the pet chew article of FIGS. 1 and 2;
FIG. 4 is a table of formulations for polymer compositions which may be used to form the pet chew article of FIGS. 1 and 2; and
FIG. 5 is a melt temperature plot for a polyamide terpolymer formed of polyamide-6; polyamide-6,6; and polyamide-6,12 segments.

### DETAILED DESCRIPTION

It may be appreciated that the present disclosure is not limited in its application to the details of construction and the arrangement of components set forth in the following description or illustrated in the drawings. The invention(s) herein may be capable of other embodiments and of being practiced or being carried out in various ways. Also, it may be appreciated that the phraseology and terminology used herein is for the purpose of description and should not be regarded as limiting as such may be understood by one of skill in the art.

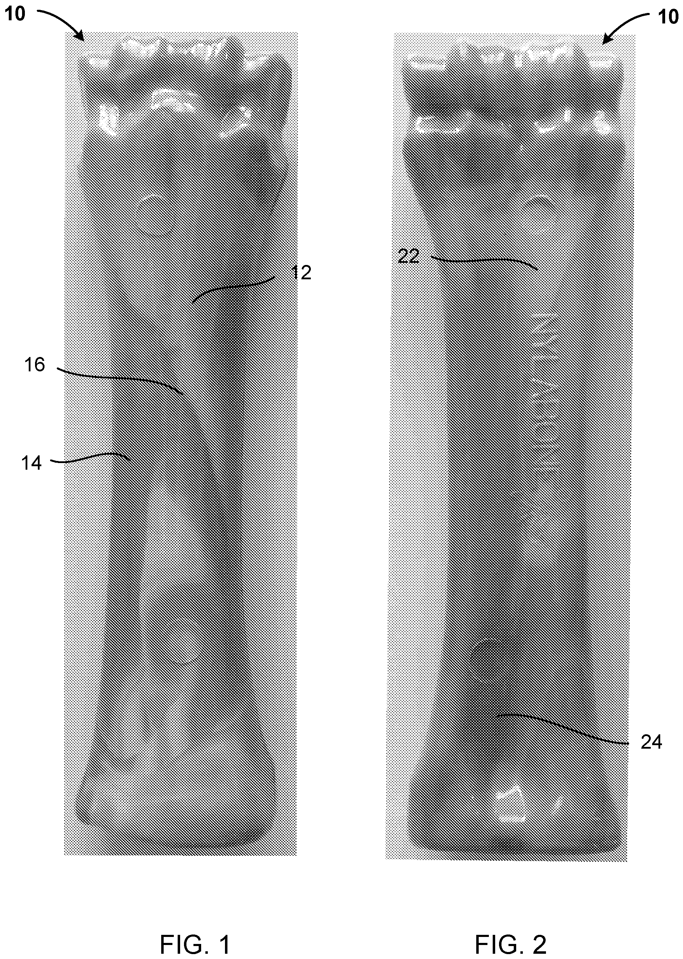

Referring now to FIGS. 1 and 2, there is shown a pet chew article 10 according to the present disclosure, which more particularly has the form of a bone.

Pet chew article 10 may be manufactured by high-pressure (e.g. injection pressure in excess of 1,000 psi), thermoplastic injection molding, and more particularly co-injection molding.

For the present disclosure, thermoplastic co-injection molding may be understood as a thermoplastic injection molding process in which at least two polymer compositions are injected into a molding cavity of an injection mold to form an injection molded article, particularly in the form of pet chew article 10. It should also be understood herein that the injection mold may have one molding cavity, or a plurality of molding cavities to increase output and reduce manufacturing cost.

The at least two polymer compositions to from the pet chew article 10 are different polymer compositions. It should be understood herein that polymer compositions are considered different if they are not exactly the same composition. For example, two polymer compositions are considered to be different herein if they have different percentages of the same ingredients, or different ingredients, for example, to provide different colors.

A first polymer composition may be melt processed in a first plasticizing injection unit, which may more particularly comprise a first reciprocating screw plasticizing injection unit. Similarly, a second polymer composition may be melt processed in a second plasticizing injection unit, which may more particularly comprise a second reciprocating screw plasticizing injection unit. The first reciprocating screw plasticizing injection unit and the second reciprocating screw plasticizing injection unit may plasticize and heat the first polymer composition and the second polymer composition, respectively, by aid of a reciprocating screw contained within a heated barrel of the injection units.

The first polymer composition may have a first polymer composition color, and the second polymer composition may have a second polymer composition color which is different from the first polymer composition color. It should also be understood herein that the first polymer composition color and the second polymer composition color are considered different if the two compositions have a color difference which is detectable by the naked human eye, which may be quantified by having a delta-E (dE) value of at least 1.0 in terms of the CIE 1976 (L*, a*, b*) color space specified by the International Commission on Illumination.

Generally, a delta-E value of less than 1 is invisible to the naked human eye. A delta-E value of 1 to 2 may be understood as a color change with a very small difference (e.g. only obvious to the trained eye), while a delta-E value of 2 to 3.5 may be understood as a color change with a medium difference (e.g. obvious to an untrained eye). Herein, preferably the first polymer composition color and the second polymer composition have a delta-E color difference of at least 3.0.

The first polymer composition may be injected into the molding cavity of the injection mold through a first gate, while the second polymer composition may be injected into the molding cavity of the injection mold through a second gate. Alternatively, the first polymer composition and the second polymer composition may be injected into the molding cavity through a common (shared) gate to form the pet chew article 10.

The first polymer composition and the second polymer composition may be injected into the molding cavity sequentially or simultaneously. For sequential injection molding, it should be understood that injection time of the first polymer composition is initiated and concluded before injection of the second polymer composition. More particularly, for sequential injection, injection of the second polymer composition should be initiated no more than 10 seconds after injection of the first polymer composition has concluded, and more particularly should be initiated no more than 5 seconds after injection of the first polymer composition has concluded, to better ensure that the first polymer composition still may be above its melt temperature and still flow and mix with the second polymer composition in the molding cavity. For simultaneous injection molding, it should be understood that at least a portion of the injection time of the first polymer composition and the injection time of the second polymer composition occur at the same time (i.e. overlap). Injection of the first and second polymer compositions may also be initiated and/or concluded at the same time.

The first polymer composition and the second polymer composition are injected into the molding cavity to form the pet chew article such that the first polymer composition and the second polymer composition mix and form a heterogeneous mixture of the first polymer composition and the second polymer composition.

Due the mold arrangement and injection molding process conditions, such as plasticizing the first polymer composition and the second polymer composition in separate plasticizing units, the pet chew article 10 may be formed from the heterogeneous mixture of the first polymer composition and the second polymer composition such that an outer surface of the pet chew article 10 is variegated. The variegated outer surface is formed with a plurality of regions with each region having a different color. The various regions of the molded article may exhibit different colors, particularly due to different levels of blending of the two polymer compositions at the various regions.

For example, one region of the molded article may experience a high level of blending while another region of the molded article may experience a low level of blending or no blending. Alternatively, even two regions of the molded article may exhibit equal levels of blending, the two regions may still exhibit different shades of color resulting from different weight percentages of each polymer composition at each region.

As shown by FIGS. 1 and 2, pet chew article 10 has a variegated outer surface which comprises a plurality of different colored regions, such as shown by regions 12, 14 of FIG. 1, and regions 22, 24 of FIG. 2. As shown, the plurality of different front colored regions 12, 14 and rear colored regions 22, 24 are not identical, but rather random with different sizes and different shapes. More particularly, as best shown by FIG. 1, the colored regions 12, 14 are irregularly shaped as part of a marbled pattern on the outer surface of the pet chew article 10, which further comprises a swirl pattern. In other words, the shape of colored regions is without symmetry.

Also as shown by FIGS. 1 and 2, the plurality of different colored regions 12, 14 are separated by at least one striation line 16 formed at an intermingling of the first polymer composition and the second polymer composition. Also as shown, the plurality of different colored regions 12, 14 separated by the at least one striation 16 change in color along a length of the striation 16.

Without being bound to a particular theory, it is believed the at least one striation lie 16 is formed by a flow pattern of the first polymer composition and the second polymer composition as the first polymer composition and the second polymer composition fill the at least one molding cavity to form the pet chew article 10.

In certain embodiments, the first polymer composition may have a white color, while the second polymer composition may have a red or pink color. The pet chew article 10 may then be formed from a heterogeneous mixture of the first polymer composition and the second polymer composition such that an outer surface of the pet chew article is variegated, wherein the variegated outer surface is formed of a plurality of regions with each region having a different color. More particularly, the regions 12, 22 appearing whiter may provide a more realistic appearance of a bone, or fat tissue located on a bone, while the reddish/pink regions 14, 24 of the pet chew product 10 may provide a more realistic appearance of soft (lean) tissue located on a bone.

Recognizing that bone and/or fat tissue may generally have a hardness which is greater than that of soft (lean) tissue, the first polymer composition and the second polymer composition may have hardness level values which are different. For example, to simulate soft and hard bone, the first polymer composition may have a Shore D durometer hardness in a range of 55-90 Shore D durometer hardness. To simulate fat, the first polymer composition may have a Shore A durometer hardness in a range of 75-100 (which may be understood as equivalent to 25-50 Shore D). Alternatively, to simulate soft (lean) tissue, the second polymer composition may have a hardness in a range of 25-70 Shore A durometer hardness, and more particularly in a range of 45-70 Shore A durometer hardness.

Various regions of the molded article may exhibit different levels of hardness, which may result from different levels of blending of the two polymer compositions at the various regions. For example, a region of the pet chew article 10 which has a greater proportion of the first polymer composition, such as regions 12, 22, may be expected to have a relatively higher level of hardness that a region of the pet chew article 10 which has a greater proportion of the second polymer composition, such as regions 14, 24.

It may also be appreciated that the different levels of blending of the two polymer compositions in various regions of the pet chew article 10 may provide the pet chew article with various levels of hardness. Thus, for example, an intermediate region of the pet chew article 10 which is between a first region with a high proportion of the first polymer composition (having a high hardness) and a second region with a high proportion of the second polymer composition (having a low hardness), and which has a more uniform proportion of the first polymer composition and second polymer composition, may exhibit at least one intermediate hardness value, as well as a plurality of intermediate hardness values, between the first polymer composition hardness value and the second polymer composition hardness value.

In yet another embodiment of the present disclosure, first polymer composition may have a first polymer composition visible light transmissivity level, and the second polymer composition may have a second polymer composition visible light transmissivity level which is different from the first polymer composition visible light transmissivity level. For example, the first polymer composition may have a visible light transmissivity level greater than or equal to 50%, and more particularly greater than or equal to 60%, and even more particularly greater than or equal to 70% (e.g. 75%-99%). On the other hand, the second polymer composition may have a visible light transmissivity level of less than or equal to 50%, and more particularly less than or equal to 40%, and even more particularly less than or equal to 30% (e.g. 1%-25%).

With the foregoing differences in light transmissivity level, the outer surface of the pet chew article 10 may be formed of a plurality of regions with each region having a different visible light transmissivity, which may be used to change the visual perception of the pet chew article 10.

When injection molding a plurality of pet chew articles 10 in sequence, the present disclosure also provides for the ability to change the pet chew article 10 from one molding cycle to the next molding cycle such that all the pet chew articles 10 are not formed from exactly the same injection molding process and do not exhibit the same visual characteristics. More particularly, after forming a first pet chew article 10, at least one process parameter of the injection molding process may be changed prior to forming the next pet chew article 10. Such may be performed to change the colored regions of the pet chew article 10 and/or change the hardness regions of the pet chew article 10 and/or change the light transmissivity level of the regions of the pet chew article 10.

For example, changing at least one process parameter of the injection molding process prior to forming a subsequent pet chew article 10 may comprise changing an injection profile of at least one of the first polymer composition and the second polymer composition. More particularly, changing the injection profile of at least one of the first polymer composition and the second polymer composition may comprise changing at least one of an injection pressure and injection time of at least one of the first polymer composition and the second polymer composition.

Also, in other embodiments, changing at least one process parameter of the injection molding method prior to forming a subsequent pet chew article 10 may comprise changing a shot size of at least one of the first polymer composition and the second polymer composition. More particularly, changing a shot size of at least one of the first polymer composition and the second polymer composition may comprise decreasing the shot size of the first polymer composition and increasing the shot size of the second polymer composition to change the relative percentages of each composition on the pet chew article 10.

While the foregoing disclosure provides an exemplary embodiment of a pet chew article 10 according to the present disclosure, it should be appreciated that the animal chew article 10 may not be limited to the shape of a dog bone, but may have any shape that may be conducive to interaction with an animal to provide a chewing and/or eating experience. For instance, while the pet chew article 10 is shown in the configuration of a single bone, the pet chew article 10 may comprise a plurality of bones, such as may be provided by a rack of (spare) ribs. In other embodiments, the pet chew article 10 may be in the form of an animal (e.g., a rodent, a fish).

With regards to materials, the first polymer composition may be a rigid polymer composition comprised of at least one polymer, which may comprise at least one synthetic polymer and/or natural polymer. As used herein, a rigid polymer composition may be understood as a polymer composition which has a three-point bending flexural modulus, as measured by ASTM D790-10, of greater than 10342,136 bar = 150,000 psi., and more particularly greater than 13789,515 bar = 200,000 psi.

With regards to synthetic polymers, the at least one synthetic polymer may comprise a polyamide polymer. More particularly, the at least one polyamide polymer may comprise a polyamide copolymer (a polymer formed from two or more different monomers producing two or more different polyamide segments within a polymer chain). Even more particularly, the at least one polyamide polymer may comprise a polyamide terpolymer, particularly of three different polyamide segments which serve to depress the observed melt temperature Tm of the copolymer composition.

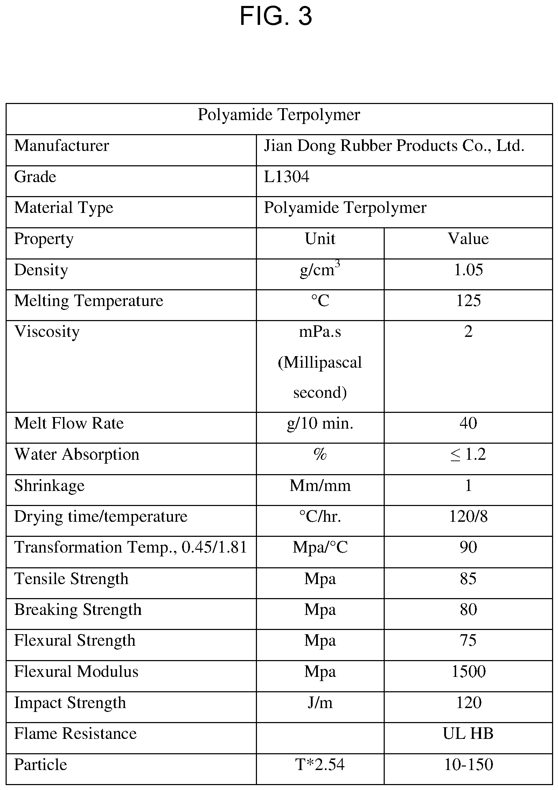

FIG. 3 shows certain properties of an exemplary polyamide terpolymer which may be obtained from Jian Dong Rubber Products Co., Ltd of China, particularly having the product designation L1304. The polyamide structures are identified below and amount to a terpolymer of PA-6, PA-1212 and PA-66 (i.e. the repeating units as shown are covalently linked into a terpolymer structure).

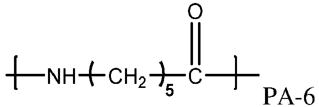

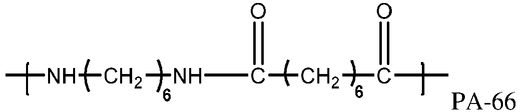

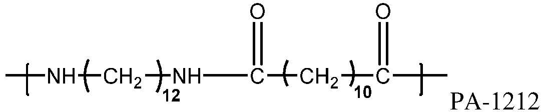

Additionally, the first polymer composition may comprise a blend of the polyamide terpolymer with at least one elastomer, such as a diene rubber (e.g. polybutadiene or polyisoprene). A particular example of a diene rubber is natural rubber (cis-1,4-polyisoprene).

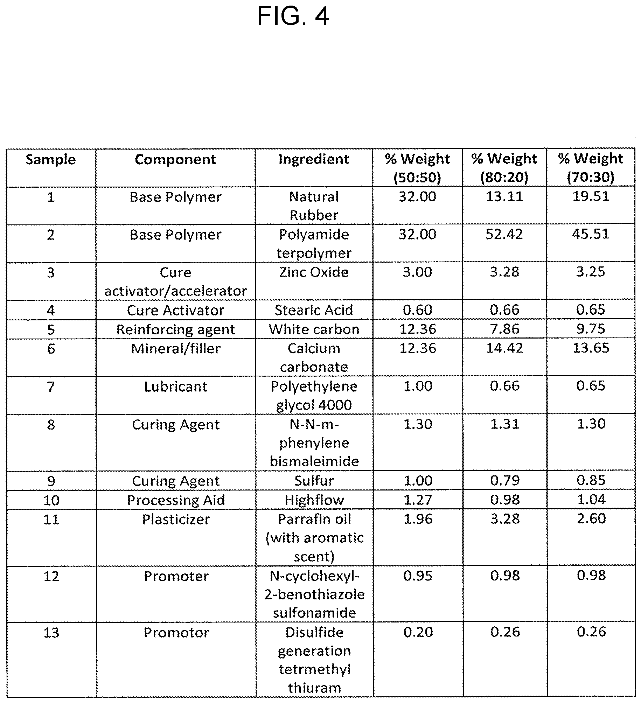

To provide the first polymer composition, the polyamide terpolymer and the elastomer, such as natural rubber, may be first melt mixed together. Exemplary formulations to produce the first polymer composition are shown in FIG. 4, in which the natural rubber may initially be in an uncured state.

In FIG. 4, reference to the 50:50 formulation is reference to the use of equal amounts (32.00 % by weight) of natural rubber (cis-1,4-polyisoprene) and the polyamide terpolymer. Reference to the 80:20 formulation is reference to the use of 52.42 % by weight polyamide terpolymer and 13.11 % by weight natural rubber. Reference to the 70:30 formulation is reference to the use of 45.51 % by weight polyamide terpolymer and 19.51 % by weight natural rubber. As may also be appreciated, the polyamide terpolymer and the natural rubber may be the two base polymeric ingredients of the composition and each is present at a weight percent greater than any other polymeric ingredient (e.g. the lubricant such as polyethylene glycol).

Accordingly, while the polyamide terpolymer and the natural rubber are shown in FIG. 4 in one example to be equally provided at 32% by weight of the full composition, the percentages of the polyamide terpolymer and the natural rubber in the composition may not in combination be necessarily equal to or limited to 64%. For example, the polyamide terpolymer may be in a range between 30% to 95% by weight of the entire composition, more particularly 50% to 95% of the composition. The rubber, on the other hand, may be present at 5% to 50% by weight of the full composition.

When the polyamide terpolymer and elastomer (e.g. cis-1,4-polyisoprene) are both present, the variable to also consider is the particular weight ratio of the two polymeric components relative to one another. In that regard, the weight ratio of the two polymeric components may range from 1:10 by weight (i.e. 1 part elastomer to 10 parts polyamide), 1:9, 1:8, 1:7, 1:6, 1:5, 1:4, 1:3, and 1:2 and 1:1 (i.e. equal parts by weight elastomer to polyamide). As noted above in FIG. 4, the polyamide is particularly present at 32 % by weight of the entire formulation and the elastomer is present at 32 % by weight, therein providing the situation wherein the polyamide terpolymer and elastomer are, with respect to one another, present at a 1:1 weight ratio.

Turning to the manufacture the first polymer composition to the foregoing formulation shown in FIG. 4, the polyamide terpolymer may be first dried to remove moisture, such as in an oven or other drying device for a suitable period of time. Thereafter, polyamide terpolymer and the elastomer (e.g. natural rubber) may be added to an intensive (high shear) mixing apparatus, which may be particularly constructed to mix rubber containing compounds which exhibit properties of non-Newtonian fluids. The mixing apparatus may particularly be an internal mixer, in which mechanical work, heat and pressure are applied simultaneously to the polymer materials.

One type of internal mixer may be understood to comprise a mixing chamber comprising two adjacent cylindrical chambers in which the materials are deformed by contra-rotating blades or rotors in each chamber. The chambers and rotors may be arranged for heating or cooling to control the batch temperature. The mixing chamber may be jacketed or otherwise arranged for cooling, and may be provided with a feeding hopper which can be closed by means of a pneumatically operated vertical ram. Examples of intensive mixers may include kneading machines, such as from Banbury and Kneading Machinery which may have an intermeshing or tangential rotor design.

In the mixing apparatus, the polyamide terpolymer and the natural rubber may be mixed under suitable conditions to provide a homogeneous (uniform) dispersion of the natural rubber in the polyamide in a melt state. Furthermore, the material may be processed such that the natural rubber is masticated, i.e. reduction in elasticity occurring when rubber is intensively worked as to reduce the molecular weight thereof. For example, during mixing, the polyamide and the natural rubber may be mixed in a temperature range of 130°C for 15 minutes.

Thereafter, once the polyamide terpolymer and the natural rubber have been uniformly mixed and melt blended, the remaining ingredients of the first polymer composition may be added to the polyamide terpolymer and the rubber.

Once all the ingredients of the composition have been added to the mixing apparatus, the temperature of the composition may be increased to a temperature range of range of 150°C for 20 minutes, and more particularly at 125-150°C for 15 minutes to vulcanize (cross-link) the uncured natural rubber.

Uncured natural rubber may be understood as a plastic material which easily undergoes permanent (inelastic) deformation when heat and pressure are applied thereto. In order to increase the elasticity of the material, the natural rubber may be cross-linked by vulcanization. Vulcanization may be understood as a generally irreversible chemical process for cross-linking uncured natural rubber with one or more curatives, which may collectively be referred to as a curative package. The curative package modifies the uncured natural rubber by forming cross-links (bridges) which link between the individual polymer chains of the rubber, thus inhibiting the polymer chains from moving independently and adding elasticity to the material.

The cross-linking may particularly be performed with sulfur, with the reactive (cure) sites being allylic hydrogen atoms of the natural rubber, positioned adjacent to carbon-carbon double bonds of the polymer chains. During vulcanization, some of the C-H bonds of a polymer chain may be replaced by chains of sulfur atoms that cross-link with a cure site of another polymer chain. The number of sulfur atoms of the cross-link may then influence the physical properties of the cured rubber, with short cross-links associated with the better heat resistance and longer cross-link associated with better dynamic (e.g. flex) properties. It is also contemplated herein the crosslinking may be achieved by introduction of free-radical initaitors and formation of free-radicals through heating, which may then crosslink the unsaturated diene polymer such as the diene polymer of natural rubber.

The sulfur by itself may therefore be understood as a relatively slow vulcanizing agent. Consequently, vulcanization (cure) activators and accelerators may be used in combination with the sulfur, such as zinc oxide and stearic acid, as part of the cure package to increase cross-linking efficiency, as well as increase physical properties of the cured rubber.

It should be understood that after the rubber cures, the polyamide terpolymer/rubber polymer composition transforms from a blend of two plastic polymer materials to a blend of plastic polyamide terpolymer and thermoset rubber polymer materials. The polyamide terpolymer and the rubber may also be understood to be immiscible in one another such that, upon their mixture, two distinct phases are created, with the polyamide terpolymer forming the matrix or continuous phase domain in which the rubber phase forms the discontinuous phase domain and is dispersed as isolated volumes (i.e. surrounded by the continuous phase but isolated from one another within the mixture). However, the rubber/polyamide polymer composition remains a melt flowable composition due to the presence of the plastic polyamide terpolymer.

Upon proper cure of the rubber in the intensive mixer, the mixed composition may be cooled to a to a temperature range of range of 120 °C and discharged from the mixer as a mass.

The mass may be discharged or transported directly onto a mill, such as a two-roll mill, for additional mixing and/or shaping of the mass into a sheet having a thickness in a range of 25-30 mm. The mill may include two horizontally-disposed, parallel rollers that contra-rotate relative to one another. The mixed mass may be fed between the two rollers at a nip point. The rollers may be temperature controlled to process the mixed mass at a temperature in a range of 60-90 °C. The sheet may have a thickness in a range of 10-50 mm. Upon exiting the rollers, the sheet may be slit into narrow strips having a width in a range of 1-50 mm.

The foregoing polyamide/rubber composition may now be used as the first polymer composition for subsequent molding of the pet chew article 10 such as by injection molding, particularly by having the strips of material introduced directly into the hopper of the first plasticizing injection unit.

As set forth above, one particular polyamide terpolymer has a melt temperature of 125°C. This melt temperature may allow mastication of the natural rubber to occur with reduced likelihood of thermal degradation as may be ordinarily associated with higher mastication temperatures.

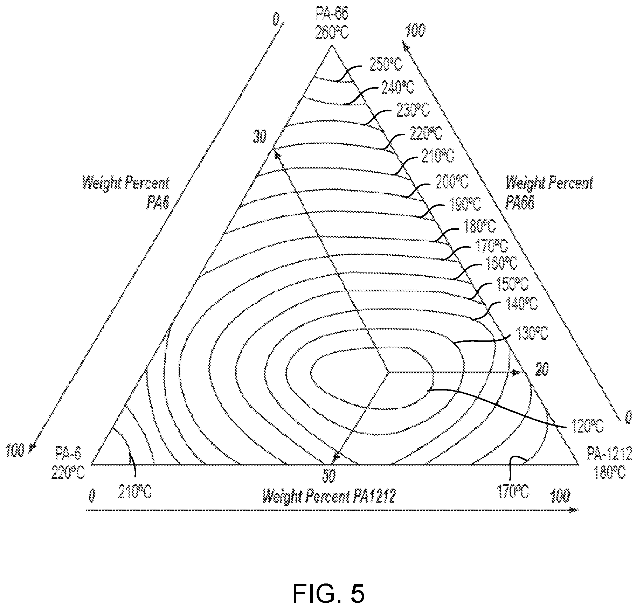

Referring now to FIG. 5, there is shown a melt temperature plot for a polyamide terpolymer formed of polyamide-6; polyamide-6,6; and polyamide-12,12 segments. That is, the isothermal melting temperature lines are identified. As shown, the melt temperature of a terpolymer containing PA-6, PA-66 and PA-1212 varies based on the indicated percentage of each individual polyamide segment within the copolymer. As shown, the polyamide-6 segments on their own may be understood to have a melting temperature of 220°C, the polyamide-6,6 segments on their own may be understood to have a melting temperature of 260°C; and the polyamide-12,12 segments on their own may be understood to have a melting temperature of 183°C.

However, as shown, the melting temperature decreases when various percentages of each segment are employed and combined into a polyamide terpolymer. For example, as illustrated for a composition containing 30% PA-6, 20% PA-66 and 50% PA-1212, the Tm is observed to be 120 °C. Without being bound by theory, it is believed that the random terpolymer polyamide structure is such that the individual homopolymer polyamide segments may interfere with the ability of each segment to fully crystallize, thereby driving the observed Tm down to the now identified temperatures. In any event, the reduced Tm is now advantageously utilized to form the identified polyamide-elastomeric blends herein as applied to pet chew toy construction. The reduced Tm of the polyamide terpolymer may therefore fall in the range of 120 °C to 250 °C, more particularly from 120 °C to 200 °C, and more particularly from 120 °C to 150 °C.

The second polymer composition used to form the pet chew article 10, may also be formed of an elastomer, which may comprise diene rubber, and particularly comprise natural rubber (cis-1,4-polyisoprene). It is useful to therefore note that in general, the elastomer herein (including the elastomer for the first polymer composition discussed herein) may be understood as any material with a Tg below room temperature and which is at most, 50% crystalline (i.e., the material contains an amorphous phase of 50% or greater, up to 100% amorphous phase). As used herein, an elastomer may be characterized as a material that has an elongation at 23°C of at least 100%, and which, after being stretched to twice its original length and being held at such for one minute, may recover in a range of 50% to 100% within one minute after release from the stress. More particularly, the elastomer may recover in a range of 75% to 100% within one minute after release from the stress, and even more particularly recover in a range of 90% to 100% within one minute after release from the stress.

The elastomer may be comprised of any polymer, including natural or synthetic polymers, and thermoplastic or thermoset polymers. Thus, the elastomer may be either a natural or synthetic elastomer. The elastomer may comprise, essentially consist of or consist of natural or synthetic rubber, which may include, acrylic rubber, butadiene rubber, butyl rubber, ethylene propylene rubber, ethylene propylene rubber diene monomer rubber, fluorocarbon rubber, isoprene rubber, nitrile rubber including hydrogenated nitrile rubber, polyurethane rubber, silicone rubber and styrene block copolymer (e.g. styrene butadiene rubber, styrene ethylene/butylene styrene rubber).

The second polymer composition also is one that may particularly comprise relatively more elastomer than the first polymer composition (e.g. greater than 50% by weight of the composition noted above). In the second polymer composition, the elastomer may therefore be present at levels greater than 50% by weight and up to 75% by weight of the entire pet chew toy, particular when relatively softer and more elastic features are desired relative to the first polymer composition.

Accordingly, the first polymer composition may have a first hardness, flexural modulus or tensile strength which is different from the corresponding values for the second polymer composition. For example, the first polymer composition may have a Shore A durometer hardness, as measured by ASTM D2240-05 (2010), of greater than 70, including all values and increments therein up to 100, e.g. 80, 90, etc.

The second polymer composition may have a Shore A durometer of less than 65, including all values and increments therein, including less than 60, less than 50 and less than 40. Therefore, the Shore A durometer hardness of the first polymer composition may be higher than the Shore A durometer hardness of the second polymer composition.

More particularly, the difference in hardness of the first polymer composition to the second polymer composition may be in a range of 5-60 units of the Shore A durometer scale, and more particularly 10-50 units of the Shore A durometer scale and even more particularly 15-40 units of the Shore A durometer scale.

In addition, the first polymer composition may have a flexural modulus, as measured by ASTM D790-10, of greater than 6894,757 bar = 1 00,000 psi. The second polymer composition may have a flexural modulus of less than 6205,28 bar = 90,000 psi., including all values and increments therein, including less than 5515,8 bar = 80,000 psi, less than 4136,85 bar = 60,000 psi. and less than 2757,9 bar = 40,000 psi.

Along such lines, it may be appreciated that the first polymer composition and the second polymer composition may be tailored to provide a pet chew article 10 with differing hardness and flexibility in differing regions.

In other embodiments, the first and/or second polymer compositions may include or be completely replaced by an edible polymer composition. In such regard, first and/or second polymer compositions may comprise, consist essentially or consist of an edible polymer composition, which may also be digestible.

The first and/or second edible polymer compositions may comprise any edible polymer, particularly starch or other carbohydrate of natural or vegetable origin. The starch may include amylose and/or amylopectin and may be extracted from plants, including but not limited to potatoes, rice, tapioca, corn and cereals such as rye, wheat, and oats. The starch may also be extracted from fruits, nuts and rhizomes, or arrowroot, guar gum, locust bean, arracacha, buckwheat, banana, barley, cassaya, konjac, kudzu, oca, sago, sorghum, sweet potato, taro, yams, fava beans, lentils and peas. The starch may be present in the edible composition between 30-99% including all increments and values therebetween such as levels above 50%, 85%, etc.

The starch employed herein may be raw starch, which may be understood as starch that has not seen a prior thermal molding history, such as extrusion or other type of melt processing step where the resin is shaped in the presence of heat. The raw starch itself may also be native, which may be understood as unmodified starch recovered in the original form by extraction and not physically or chemically modified. The raw starch may also be in powder form of varying particle size, which may be in the range of 100-2000 µm including all ranges and increments therein. Raw starch may be understood as milled and/or pre-sifted starch. It should be understood that the raw starch may also have varying degrees of moisture present. In one embodiment moisture may be present in the raw starch between 1-60%, including all increments and values therebetween such as 40%, 20%, 10%, etc.

The edible polymers herein may be sourced from Manildra Group USA, under the following tradenames: "GEMSTAR 100" which is a refined food grade wheat starch; "GEMSTAR100+" which is a refined food grade wheat starch; "GEM OF THE WEST VITAL WHEAT GLUTEN" which is a powder product by low temperature drying of gluten extracted from wheat flour; "ORGANIC GEM OF THE WEST VITAL WHEAT GLUTEN" which is a powder product by low temperature drying of gluten extracted from organic wheat flour; "ORGANIC GEMSTAR 100" which is a wheat starch extracted from organic what flour; and/or "ORGANIC GEMGEL 100" which is a pregelatinized organic wheat starch In addition, the edible polymers may be sourced from ADM under the tradename "EDIGEL 100" which is a wheat starch; "AYTEX P" which is a unmodified food grade wheat starch.

Other edible polymers may be contemplated that may be derived from animal sources such as casein, denatured or hydrolyzed casein, collagen, denatured or hydrolyzed collagen, rawhide, gelatin, other animal protein products, such as animal meal. The edible polymers may also be derived from plant matter such as gluten, vegetable matter, nuts, such as nut flour, paste or bits, fruit matter, etc. It should also be appreciated that the various edible polymers, (i.e. starch, animal derived sources, and plant derived sources) may be blended with other edible polymers.

For example, glutens may be incorporated into the first and/or second edible polymer compositions. Gluten may be understood as water-insoluble protein complex extracted from cereal grains such as maize or corn and wheat. The gluten may be present individually or cumulatively between 0.1-50% by weight of the polymer composition and all increments and values therebetween including 0.1-5.0%, 15%, 25%, etc.

In addition various additives may be incorporated into the first and/or second edible polymer compositions. For example, the first and/or second polymer compositions may also comprise an attractant. The attractant may be present at a level of between 0.1% to 10% by weight of the composition, including all ranges and increments therein. The attractant may be an olfactory stimulant or a flavoring. Exemplary attractants may include the meal or by-products of fish, meat, poultry, etc. In addition, the attractants may include animal digests. By animal digest it is meant to include a substance made by taking relatively clean and relatively undecomposed animal tissue and breaking it down utilizing chemical or enzymatic hydrolysis. The animal digest may include hydrolyzed liver, e.g., hydrolyzed poultry liver. In addition, the animal digests may not contain hair, horn, teeth, hooves or feathers, which may be present in unavoidable trace amounts. The animal digests may be obtained, for example, from Applied Food Biotechnology Incorporated, O'Fallon, Mo., and sold under the trade name Optimizor. The attractants may be provided in a number of forms such as liquid or powder. It may also be provided as a concentrate.

The first and/or second edible polymer compositions may include cellulose. The cellulose may be, for example, a long-chain polymer of polysaccharide carbohydrate. The cellulose may also be derived or extracted from plants. The cellulose may be incorporated into the edible polymer composition between 1-15% by weight of the edible polymer composition and any increment or value therebetween including 4%, 10%, 11%, etc.

Emulsifiers or surfactants may also be incorporated into the first and/or second edible polymer compositions. The emulsifier may be present between 1-10% by weight of the edible polymer composition and all increments or values therebetween including 3%, 4%, etc. The emulsifier may include, for example, lecithin, which may be extracted or derived from, for example, egg yolk or soy beans.

The first and/or second edible polymer compositions may also include a plasticizer. The plasticizer may include for example, glycerin. The plasticizer may be incorporated between 15-30%, including all increments and values therebetween such as levels greater than 15%, 21%, 27% etc.

A humectant may also be incorporated into the first and/or second edible polymer compositions. The humectant may include, for example, oat fiber. The humectant may be incorporated between 0.1-5% by weight of the edible composition including all intervals and values therebetween, including 1%, 25%, etc. A humectant may be understood to be any additive that may absorb water in the material.

The first and/or second edible polymer compositions may also include water. The water may be introduced into the composition between 1-40% by weight of the edible polymer compositions and any increment or value therebetween, including 4%, 20-40%, 10-20%, etc. After the product has been formed, the water may be present between 1-20% by weight of the resin composition including all increments or values therebetween, such as, below 20%, 4%, 5-10%, etc.

The first and/or second edible polymer compositions may include a nutraceutical. The nutraceutical may be fermented soya. Fermented soya nutraceuticals are available from Bio Food, Ltd., Pine Brook, N.J. and sold under the general trademark Soynatto®. The fermented soya may be present between 1-40% by weight of the resin composition, including all increments and values therebetween, including 10%, 20%, etc.

The first and/or second edible polymer compositions may also include enzymes and/or co-enzymes which are similarly available through Bio Foods, Ltd., Pine Brook, N.J. and sold under the trademark of BT-CoQ10™. This reportedly is a biologically transformed (fermented) cell mitochondrial coenzyme and contains Coenzyme Q10, antioxidants, phytonutrients and cofactor mineral nutrients and other cell constituents. The enzymes and/or co-enzymes may be present between 0.1-10% by weight of the polymer composition, including all increments and values therebetween such as 1%, 5%, etc.

In addition, herbal extracts, vitamins, minerals, colorants, yeast products, soy products, attractants, etc., may also be incorporated into the first and/or second edible polymer compositions. Yeast products, for example, may include nutritional yeast or brewers yeast such as Saccharomyces cerevisiae, dairy yeast such as Kluyveromyce marxianus or wine yeast such as Saccharomyces fermentati.

The ingredients for the first and/or second edible polymer compositions may be compounded in an extruder and fed to the first and/or second plasticizing units disclosed above, respectively. Molding of the edible resin compositions may be carried out according to the teachings of U.S. application Ser. No. 11/747,132.

## Claims

1. An injection molding method to form a pet chew article, the injection molding method comprising:
providing an injection mold including at least one molding cavity to form the pet chew article;
providing a first polymer composition, the first polymer composition having a first polymer composition color;
providing a second polymer composition, the second polymer composition having a second polymer composition color different from the first polymer composition color, wherein a color difference between the first polymer composition and the second polymer composition has a CIE 1976 L*a*b* color space delta-E value of at least 3.0; plasticizing the first polymer composition with heat in a first plasticizing injection unit, wherein the first plasticizing injection unit comprises a first reciprocating screw plasticizing injection unit;
plasticizing the second polymer composition with heat in a second plasticizing injection unit, wherein the second plasticizing injection unit comprises a second reciprocating screw plasticizing injection unit;
injecting the first polymer composition and the second polymer composition into the at least one molding cavity to form the pet chew article such that the first polymer composition and the second polymer composition mix and form a heterogeneous mixture;
forming the pet chew article from the heterogeneous mixture of the first polymer composition and the second polymer composition such that an outer surface of the pet chew article is variegated, wherein the variegated outer surface is formed of a plurality of regions with each region having a different color.

2. The method of claim 1 wherein:
the plurality of regions are part of a marbled pattern on the outer surface of the pet chew article.

3. The method of claim 1 wherein:
the plurality of regions form a swirl pattern on the outer surface of the pet chew article.

4. The method of claim 1 wherein:
each region is irregularly shaped.

5. The method of claim 1 wherein:
the plurality of regions are separated by at least one striation formed at an intermingling of the first polymer composition and the second polymer composition.

6. The method of claim 5 wherein:
the plurality of regions separated by the at least one striation change in color along a length of the striation.

7. The method of claim 5 wherein:
the at least one striation is formed by a flow pattern of the first polymer composition and the second polymer composition as the first polymer composition and the second polymer composition simultaneously fill the at least one molding cavity to form the pet chew article.

8. The method of claim 1 wherein:
the first polymer composition has a first polymer composition hardness value; and
the second polymer composition has a second polymer composition hardness value different from the first polymer composition hardness value.

9. The method of claim 8 wherein:
the first polymer composition has a Shore D durometer hardness value in a range of 50-90; and
the second polymer composition has a Shore A durometer hardness value in a range of 45-75.

10. The method of claim 8 wherein:
the outer surface of the pet chew article exhibits at least one intermediate hardness value between the first polymer composition hardness value and the second polymer composition hardness value.

11. The method of claim 8 wherein:
the pet chew article exhibits a plurality of hardness values between the first polymer composition hardness value and the second polymer composition hardness value.

12. The method of claim 1 wherein:
at least one of the first polymer composition and the second polymer composition comprises a elastomer.

13. The method of claim 1 wherein:
at least one of the first polymer composition and the second polymer composition comprises a synthetic polymer.

14. The method of claim 1 wherein:
at least one of the first polymer composition and the second polymer composition comprises an edible polymer.

## Patentansprüche

1. Spritzgussverfahren zum Bilden eines Kauartikels für Haustieres, wobei das Spritzgussverfahren aufweist:
Bereitstellen einer Spritzgussform mit zumindest einem Formhohlraum zum Bilden des Kauartikels für Haustiere
Bereitstellen einer ersten Polymerzusammensetzung, wobei die erste Polymerzusammensetzung eine erste Polymerzusammensetzungsfarbe hat;
Bereitstellen einer zweiten Polymerzusammensetzung, wobei die zweite Polymerzusammensetzung eine zweite Polymerzusammensetzungsfarbe hat, die sich von der ersten Polymerzusammensetzungsfarbe unterscheidet, wobei eine Farbdifferenz zwischen der ersten Polymerzusammensetzung und der zweiten Polymerzusammensetzung einen CIE 1976 L*a*b* Farbraum Delta-E-Wert von mindestens 3,0 aufweist;
Plastifizieren der ersten Polymerzusammensetzung mit Hitze in einer ersten Plastifizierspritzeinheit, wobei die erste Plastifizierspritzeinheit eine erste Hubspindelplastifizierspritzeinheit aufweist;
Plastifizieren der zweiten Polymerzusammensetzung mit Hitze in einer zweiten Plastifizierspritzeinheit, wobei die zweite Plastifizierspritzeinheit eine zweite Hubspindelplastifizierspritzeinheit aufweist.
Einspritzen der ersten Polymerzusammensetzung und der zweiten Polymerzusammensetzung in den zumindest einen Formhohlraum, um den Kauartikel für Haustiere so zu bilden, dass die erste Polymerzusammensetzung und die zweite Polymerzusammensetzung sich mischen und eine heterogene Mischung bilden.
Bilden des Kauartikels für Haustiere aus der heterogenen Mischung der ersten Polymerzusammensetzung und der zweiten Polymerzusammensetzung, so dass eine Außenfläche des Kauartikels für Haustiere verschiedenfarbig gestaltet ist, wobei die verschiedenfarbig gestaltete Außenfläche aus einer Vielzahl von Teilbereichen gebildet ist, wobei jeder Teilbereich eine andere Farbe hat.

2. Verfahren nach Anspruch 1, wobei:
die Vielzahl von Teilbereichen Teil eines marmorierten Musters auf der Außenfläche des Kauartikels für Haustiere ist.

3. Verfahren nach Anspruch 1, wobei:
die Vielzahl von Teilbereichen ein Wirbelmuster auf der Außenfläche des Kauartikels für Haustiere bildet.

4. Verfahren nach Anspruch 1, wobei:
jeder Teilbereich unregelmäßig geformt ist.

5. Verfahren nach Anspruch 1, wobei:
die Vielzahl von Teilbereichen durch zumindest eine Rille, die bei einer Vermischung der ersten Polymerzusammensetzung und der zweiten Polymerzusammensetzung gebildet wird, getrennt wird.

6. Verfahren nach Anspruch 5, wobei:
die Vielzahl von Teilbereichen, die durch die zumindest eine Rille getrennt wird, in der Farbe entlang einer Länge der Rille verändert ist.

7. Verfahren nach Anspruch 5, wobei:
die zumindest eine Rille durch ein Strömungsmuster der ersten Polymerzusammensetzung und der zweiten Polymerzusammensetzung gebildet wird, da die erste Polymerzusammensetzung und die zweite Polymerzusammensetzung gleichzeitig den zumindest einen Formhohlraum füllen, um den Kauartikel für Haustiere zu bilden.

8. Verfahren nach Anspruch 1, wobei:
die erste Polymerzusammensetzung einen ersten Polymerzusammensetzungshärtewert aufweist und die zweite Polymerzusammensetzung einen zweiten Polymerzusammensetzungshärtewert aufweist, der sich vom Härtewert der ersten Polymerzusammensetzung unterscheidet.

9. Verfahren nach Anspruch 8, wobei:
die erste Polymerzusammensetzung einen Shore D Durometer-Härtewert in einem Bereich von 50 bis 90 aufweist und
die zweite Polymerzusammensetzung einen Shore A Durometer Härtewert in einem Bereich von 45-75 aufweist.

10. Verfahren nach Anspruch 8, wobei:
die Außenfläche des Kauartikels für Haustiere mindestens einen mittleren Härtewert zwischen dem Härtewert der ersten Polymerzusammensetzung und dem Härtewert der zweiten Polymerzusammensetzung aufweist.

11. Verfahren nach Anspruch 8, wobei:
der Kauartikel für Haustiere eine Vielzahl von Härtewerten zwischen dem ersten Polymerzusammensetzungshärtewert und dem zweiten Polymerzusammensetzungshärtewert aufweist.

12. Verfahren nach Anspruch 1, wobei:
zumindest eine der ersten Polymerzusammensetzung und der zweiten Polymerzusammensetzung ein Elastomer aufweist.

13. Verfahren nach Anspruch 1, wobei:
zumindest eine der ersten Polymerzusammensetzung und der zweiten Polymerzusammensetzung ein synthetisches Polymer aufweist.

14. Verfahren nach Anspruch 1, wobei:
zumindest eine der ersten Polymerzusammensetzung und der zweiten Polymerzusammensetzung ein essbares Polymer aufweist.

## Revendications

1. Procédé de moulage par injection pour mettre en forme un article à mâcher pour animal domestique, le procédé de moulage par injection comprenant :
la mise à disposition d'un moule à injection comportant au moins une cavité de moulage pour mettre en forme l'article à mâcher pour animal domestique ;
la mise à disposition d'une première composition de polymère, la première composition de polymère possédant une première couleur de composition de polymère ;
la mise à disposition d'une deuxième composition de polymère, la deuxième composition de polymère possédant une deuxième couleur de composition de polymère différente de la première couleur de composition de polymère, une différence de couleur entre la première composition de polymère et la deuxième composition de polymère possédant une valeur de delta-E selon l'espace de couleur L*a*b* de 1976 de la CIE d'au moins 3,0 ;
la plastification de la première composition de polymère avec de la chaleur dans une première unité d'injection de plastification, la première unité d'injection de plastification comprenant une première unité d'injection de plastification à vis-piston ;
la plastification de la deuxième composition de polymère avec de la chaleur dans une deuxième unité d'injection de plastification, la deuxième unité d'injection de plastification comprenant une deuxième unité d'injection de plastification à vis-piston ;
l'injection de la première composition de polymère et de la deuxième composition de polymère dans l'au moins une cavité de moulage pour mettre en forme l'article à mâcher pour animal domestique, de sorte que la première composition de polymère et la deuxième composition de polymère se mélangent et forment un mélange hétérogène ;
la mise en forme de l'article à mâcher pour animal domestique à partir du mélange hétérogène de la première composition de polymère et de la deuxième composition de polymère, de sorte qu'une surface externe de l'article à mâcher pour animal domestique est panachée, la surface externe panachée étant formée d'une pluralité de zones, chaque zone possédant une couleur différente.

2. Procédé selon la revendication 1 :
la pluralité de zones faisant partie d'un motif marbré sur la surface externe de l'article à mâcher pour animal domestique.

3. Procédé selon la revendication 1 :
la pluralité de zones formant un motif de tourbillon sur la surface externe de l'article à mâcher pour animal domestique.

4. Procédé selon la revendication 1 :
chaque zone étant de forme irrégulière.

5. Procédé selon la revendication 1 :
la pluralité de zones étant séparées par au moins une striation formée à un entremêlement de la première composition de polymère et de la deuxième composition de polymère.

6. Procédé selon la revendication 5 :
la pluralité de zones séparées par l'au moins une striation changeant de couleur le long d'une longueur de la striation.

7. Procédé selon la revendication 5 :
l'au moins une striation étant formée par un motif d'écoulement de la première composition de polymère et de la deuxième composition de polymère lorsque la première composition de polymère et la deuxième composition de polymère remplissent simultanément l'au moins une cavité de moulage pour former l'article à mâcher pour animal domestique.

8. Procédé selon la revendication 1 :
la première composition de polymère possédant une valeur de dureté de la première composition de polymère ; et la deuxième composition de polymère possédant une valeur de dureté de la deuxième composition de polymère différente de la valeur de dureté de la première composition de polymère.

9. Procédé selon la revendication 8 :
la première composition de polymère possédant une valeur de dureté au duromètre Shore D dans une plage de 50 à 90 ; et
la deuxième composition de polymère possédant une valeur de dureté au duromètre Shore A dans une plage de 45 à 75.

10. Procédé selon la revendication 8 :
la surface externe de l'article à mâcher pour animal domestique présentant au moins une valeur de dureté intermédiaire entre la valeur de dureté de la première composition de polymère et la valeur de dureté de la deuxième composition de polymère.

11. Procédé selon la revendication 8 :
l'article à mâcher pour animal domestique présentant une pluralité de valeurs de dureté entre la valeur de dureté de la première composition de polymère et la valeur de dureté de la deuxième composition de polymère.

12. Procédé selon la revendication 1 :
au moins une composition parmi la première composition de polymère et la deuxième composition de polymère comprenant un élastomère.

13. Procédé selon la revendication 1 :
au moins une composition parmi la première composition de polymère et la deuxième composition de polymère comprenant un polymère synthétique.

14. Procédé selon la revendication 1 :
au moins une composition parmi la première composition de polymère et la deuxième composition de polymère comprenant un polymère comestible.
